# EUROPEAN PATENT APPLICATION

(11) **EP 4 793 609 A1**
(43) Date of publication of application: **19.08.2026**
(21) Application number: 23954965.2
(22) Date of filing: 12.10.2023
(51) Int. Cl.: G01L 3/10

(54) **TORQUE SENSOR**

(71) Applicant: JTEKT CORPORATION, Kariya-shi, Aichi 448-8652 (JP)
(72) Inventor: NONOYAMA Toshio, Kariya-shi, Aichi 448-8652 (JP); TOYAMA Yuichi, Kariya-shi, Aichi 448-8652 (JP)
(74) Representative: Winter, Brandl - Partnerschaft mbB
(86) International application number: PCT/JP2023/037007
(87) International publication number: WO 2025/079198

(57) **Abstract**

The torque sensor (10) includes a first housing (40) and a second housing (50) assembled with each other in an axial direction of a shaft (11) that is a detection target. Each of the first housing and the second housing includes an opposing surface, and the opposing surfaces of the first housing and the second housing face each other in the axial direction. The first housing (40) includes a pin (49A, 49B, 49C). The second housing (50) has a pin hole (55A, 55B, 55C) extending through the second housing in the axial direction and corresponding to the pin. A head portion (HD) covering the pin hole is provided at a tip of the pin by heat staking the tip of the pin with the pin disposed in the pin hole, and the first housing (40) and the second housing (50) are thus joined. The second housing (50) includes a groove (56A, 56B, 56C) near the pin hole on the opposite surface from the opposing surface of the second housing (50). The head portion includes a stopper portion (HDS) that enters the interior of the groove.

## Description

### TECHNICAL FIELD

The present disclosure relates to torque sensors.

### BACKGROUND ART

For example, the torque sensor disclosed in Patent Document 1 includes a sensor case, a first cover, and a second cover. The sensor case is made of resin and rotatably supports a rotating body. The rotating body is a tubular body having a circular cross section, and rotates integrally with a detection target. The first cover covers a first end face of the sensor case. The first end face is an end face of the sensor case in the axial direction of the rotating body. The second cover covers a second end face of the sensor case. The second end face is an end face of the sensor case that is opposite to the first end face in the axial direction of the rotating body.

The first cover is joined to the sensor case by heat staking. That is, the sensor case includes a pin. The pin protrudes from the first end face of the sensor case in the axial direction of the rotating body. The first cover includes a pin hole. With the pin inserted into the pin hole, the first cover is joined to the sensor case by deforming a tip of the pin while applying heat and pressure to the tip of the pin. Like the first cover, the second cover is joined to the sensor case by heat staking.

### Related Art Documents

### Patent Documents

Patent Document 1: Japanese Unexamined Patent Application Publication No. 2023-63229 (JP 2023-63229 A)

### SUMMARY OF THE INVENTION

### Problem to be Solved by the Invention

In a torque sensor having two members joined by heat staking, such as the torque sensor disclosed in Patent Document 1, the following concern arises. That is, when there is a gap between the outer peripheral surface of the pin and the inner peripheral surface of the pin hole, misalignment may occur between the two members joined by heat staking.

### Means for Solving the Problem

A torque sensor according to one aspect of the present disclosure includes a detection unit configured to generate an electrical signal according to an amount of torsional deformation of a shaft that is a detection target, the detection unit including a first housing and a second housing assembled with each other in an axial direction of the shaft. Each of the first housing and the second housing includes an opposing surface, the opposing surfaces of the first housing and the second housing facing each other in the axial direction. The first housing includes a pin protruding in the axial direction from the opposing surface of the first housing. The second housing has a pin hole extending through the second housing in the axial direction and corresponding to the pin. A head portion covering the pin hole is provided at a tip of the pin by heat staking the tip of the pin with the pin disposed in the pin hole, and the first housing and the second housing are joined together. The second housing includes a groove near the pin hole on the opposite surface from the opposing surface of the second housing. The head portion includes a stopper portion that enters the interior of the groove. The stopper portion is in contact with an inner surface of the groove in a direction intersecting a direction in which the groove extends.

### BRIEF DESCRIPTION OF THE DRAWINGS

[FIG. 1] FIG. 1 is an exploded perspective view of a torque sensor according to an embodiment.
[FIG. 2] FIG. 2 is an exploded perspective view of a detection unit of the torque sensor in FIG. 1.
[FIG. 3] FIG. 3 is a plan view of a second sensor housing in FIG. 2.
[FIG. 4] FIG. 4 is a perspective view showing a main part of the second sensor housing in FIG. 2.
[FIG. 5] FIGS. 5A to 5C are cross-sectional views of a main part, illustrating a process of joining a first sensor housing in FIG. 2 and the second sensor housing in FIG. 2.
[FIG. 6] FIG. 6 is a perspective view of a main part, showing a state in which a first pin in FIG. 2 is inserted into a first pin hole in FIG. 2.
[FIG. 7] FIG. 7 is a perspective view of a main part, showing a state in which a spherical head portion is formed at the tip of the first pin in FIG. 2 by heat staking.
[FIG. 8] FIGS. 8A to 8I are plan views showing the shapes and arrangements of grooves according to other embodiments.
[FIG. 9] FIG. 9 is a perspective view showing a main part of a second sensor housing according to another embodiment.

### MODES FOR CARRYING OUT THE INVENTION

A torque sensor according to an embodiment will now be described.

### <Overall Configuration of Torque Sensor 10>

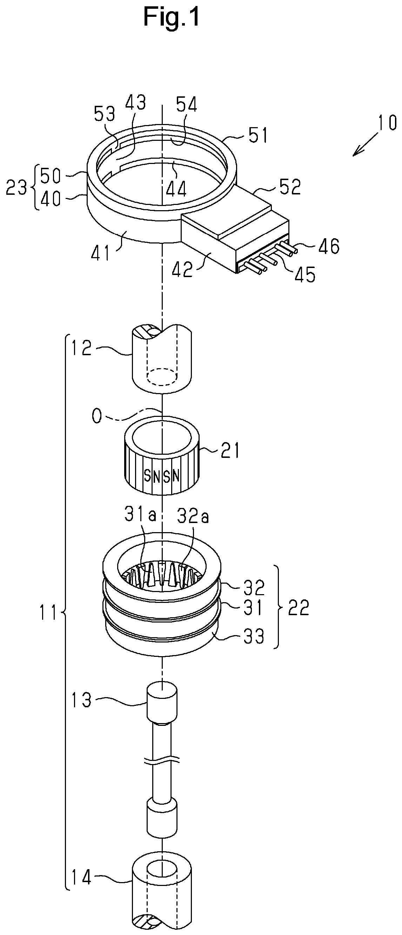

As shown in FIG. 1, a torque sensor 10 is provided on a rotating shaft 11 that is a detection target. The rotating shaft 11 includes an input shaft 12, a torsion bar 13, and an output shaft 14. The input shaft 12 and the output shaft 14 are connected to each other via the torsion bar 13. The input shaft 12, the torsion bar 13, and the output shaft 14 are located on the same axis O. The rotating shaft 11 is, for example, a steering shaft constituting a steering system of a vehicle. A steering wheel is connected to the steering shaft so as to be rotatable integrally with the steering shaft.

The torque sensor 10 detects torque applied to the rotating shaft 11 through operation of the steering wheel. The torque sensor 10 includes a permanent magnet 21, a magnetic yoke 22, and a detection unit 23.

The permanent magnet 21 has a tubular shape and a circular cross section. The permanent magnet 21 is magnetized such that south poles and north poles alternate in the circumferential direction of the permanent magnet 21. The inner peripheral surface of the permanent magnet 21 is fitted and fixed on the outer peripheral surface of the input shaft 12. The permanent magnet 21 is rotatable integrally with the input shaft 12.

The magnetic yoke 22 has a tubular shape and a circular cross section. The permanent magnet 21 is retained inside the magnetic yoke 22. The magnetic yoke 22 includes a first yoke 31, a second yoke 32, and a holder 33. The first yoke 31 and the second yoke 32 are annular members each made of a magnetic material. The first yoke 31 and the second yoke 32 are arranged along the axis O of the rotating shaft 11. The magnetic yoke 22 is formed by molding the first yoke 31 and the second yoke 32 with synthetic resin. The holder 33 is a portion of the magnetic yoke 22 that is made of synthetic resin. The holder 33 maintains the positional relationship between the first yoke 31 and the second yoke 32. The magnetic yoke 22 is fixed to the output shaft 14.

The first yoke 31 includes a plurality of teeth 31a. The teeth 31a are arranged at equal intervals in the circumferential direction of the first yoke 31. The second yoke 32 includes a plurality of teeth 32a. The teeth 32a are arranged at equal intervals in the circumferential direction of the second yoke 32. The teeth 31a and the teeth 32a extend in opposite directions along the axis O of the rotating shaft 11. The teeth 31a and the teeth 32a are alternately disposed in the circumferential direction of the first yoke 31 and the second yoke 32. When the torsion bar 13 is not torsionally deformed, the circumferential centers of the teeth 31a, 32a coincide with the boundaries between the north and south poles of the permanent magnet 21. The permanent magnet 21, the first yoke 31, and the second yoke 32 form a magnetic circuit.

The detection unit 23 generates an electrical signal according to the amount of torsion of the torsion bar 13. The detection unit 23 includes a first sensor housing 40 and a second sensor housing 50. The first sensor housing 40 and the second sensor housing 50 are assembled with each other in the axial direction. The first sensor housing 40 corresponds to the "first housing," and the second sensor housing 50 corresponds to the "second housing."

The first sensor housing 40 is a resin molded product. The first sensor housing 40 includes a first housing body 41 and a first protruding portion 42. The first housing body 41 has a tubular shape and has a first insertion hole 43 extending through the first housing body 41 in the axial direction. The inner diameter of the first insertion hole 43 is slightly larger than the outer diameter of the magnetic yoke 22. The portion of the magnetic yoke 22 in which the first yoke 31 is provided is retained in the first insertion hole 43 in the axial direction. The first protruding portion 42 has a rectangular parallelepiped shape and protrudes radially outward from the outer peripheral surface of the first housing body 41.

The first housing body 41 is provided with a first magnetic flux collecting ring 44. The first magnetic flux collecting ring 44 is in the form of an arc-shaped plate curved along the inner peripheral surface of the first insertion hole 43. The inner peripheral surface of the first magnetic flux collecting ring 44 is exposed inside the first insertion hole 43. The first magnetic flux collecting ring 44 is held at a position corresponding to the first yoke 31 in the axial direction. The first magnetic flux collecting ring 44 surrounds the first yoke 31. The first magnetic flux collecting ring 44 guides magnetic flux from the first yoke 31.

A board-in connector 45 is provided inside the first protruding portion 42. A first end of the board-in connector 45 is exposed to the outside. The first end is the opposite end of the board-in connector 45 from the first housing body 41 in a radial direction. The board-in connector 45 holds a plurality of electric wires 46. The electric wires 46 are, for example, covered wires each having a core wire covered with an insulator. The plurality of electric wires 46 is disposed at intervals in a direction perpendicular to the direction in which the first protruding portion 42 protrudes. First ends of the electric wires 46 extend outward from the first end of the board-in connector 45. The first ends are connected to an external device. The external device is, for example, a control device for the steering system.

The first magnetic flux collecting ring 44 and the board-in connector 45 are provided integrally with the first sensor housing 40 by insert molding. The insert molding is a molding technique in which an insert is placed into an open mold and then the mold is closed to perform injection molding. The first sensor housing 40 is an insert-molded product. The first magnetic flux collecting ring 44 and the board-in connector 45 are inserts.

The second sensor housing 50 is a resin molded product. The second sensor housing 50 includes a second housing body 51 and a second protruding portion 52. The second housing body 51 has a tubular shape and has a second insertion hole 53 extending through the second housing body 51 in the axial direction. The inner diameter of the second insertion hole 53 is the same as the inner diameter of the first insertion hole 42 and is slightly larger than the outer diameter of the magnetic yoke 22. The portion of the magnetic yoke 22 in which the second yoke 32 is provided is retained in the second insertion hole 53 in the axial direction. The second protruding portion 52 is in the form of a rectangular flat plate and protrudes radially outward from the outer peripheral surface of the second housing body 51. The second protruding portion 52 is superposed on the first protruding portion 42 in the axial direction.

The second housing body 51 is provided with a second magnetic flux collecting ring 54. Like the first magnetic flux collecting ring 44, the second magnetic flux collecting ring 54 is provided integrally with the second sensor housing 50 by insert molding. The second magnetic flux collecting ring 54 is in the form of an arc-shaped plate curved along the inner peripheral surface of the second insertion hole 53. The inner peripheral surface of the second magnetic flux collecting ring 54 is exposed inside the second insertion hole 53. The second magnetic flux collecting ring 54 is held at a position corresponding to the second yoke 32 in the axial direction. The second magnetic flux collecting ring 54 surrounds the second yoke 32. The second magnetic flux collecting ring 54 guides magnetic flux from the second yoke 32.

### <Supplementary Description of Detection Unit 23>

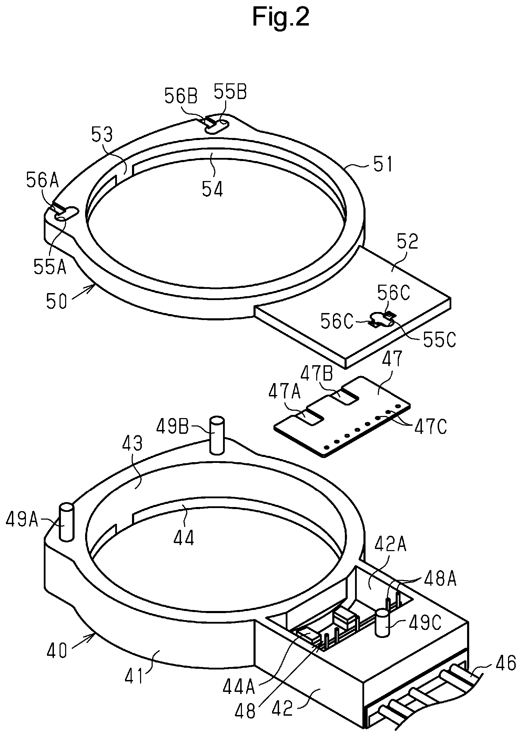

As shown in FIG. 2, the first protruding portion 42 includes a board housing portion 42A. The board housing portion 42A is open in the axial direction. The opening of the board housing portion 42A is closed by the second protruding portion 52. Two first magnetic flux collecting protrusions 44A are exposed inside the board housing portion 42A. The first magnetic flux collecting protrusions 44A are part of the first magnetic flux collecting ring 44. The first magnetic flux collecting protrusions 44A protrude outward from the peripheral wall of the first housing body 41. Pin portions 48A of a plurality of terminals 48 are disposed inside the board housing portion 42A. Each terminal 48 is attached to a second end of a corresponding electric wire 46. The pin portions 48A extend in the axial direction. The plurality of pin portions 48A is arranged in a row along the longitudinal direction of the board housing portion 42A.

A board 47 is housed inside the board housing portion 42A. The board 47 is in the form of, for example, a rectangular flat plate. The board 47 includes a first magnetic sensor 47A, a second magnetic sensor 47B, and a plurality of terminal connection holes 47C. The first magnetic sensor 47A and the second magnetic sensor 47B are arranged along a first long side of the board 47. The first magnetic sensor 47A and the second magnetic sensor 47B are sensors for detecting the rotation angle of the rotating shaft 11 and are, for example, Hall sensors. The rotation angle of the rotating shaft 11 is a physical quantity related to rotational motion of the rotating shaft 11. The plurality of terminal connection holes 47C is arranged in a row along a second long side of the board 47. The pin portions 48A are inserted into the terminal connection holes 47C. The pin portions 48A are joined to the board 47 by soldering.

Although not shown in the figures, the second magnetic flux collecting ring 54 has two second magnetic flux collecting protrusions like the first magnetic flux collecting ring 44. The second magnetic flux collecting protrusions are disposed along the surface of the second protruding portion 52 that faces the board housing portion 42A. The second magnetic flux collecting protrusions protrude outward from the peripheral wall of the second housing body 51. The second magnetic flux collecting protrusions face the first magnetic flux collecting protrusions 44A in the axial direction. Each of the first magnetic sensor 47A and the second magnetic sensor 47B is disposed between a corresponding one of the first magnetic flux collecting protrusions 44A and a corresponding one of the second magnetic flux collecting protrusions. The first magnetic sensor 47A detects magnetic flux guided to the first magnetic flux collecting ring 44. The second magnetic sensor 47B detects magnetic flux guided to the second magnetic flux collecting ring 52.

When torque is applied to the input shaft 12, the torsion bar 13 undergoes torsional deformation. Relative rotational displacement occurs between the input shaft 12 and the output shaft 14 according to the torque applied to the input shaft 12. As a result, the relative positions of the permanent magnet 21 and the first yoke 31 in the rotational direction change. Therefore, magnetic flux guided from the permanent magnet 21 to the first magnetic flux collecting ring 44 through the first yoke 31 changes. The relative positions of the permanent magnet 21 and the second yoke 32 in the rotational direction also change. Therefore, magnetic flux guided from the permanent magnet 21 to the second magnetic flux collecting ring 54 through the second yoke 32 changes.

Each of the first magnetic sensor 47A and the second magnetic sensor 47B generates an electrical signal according to the magnetic flux leaking between a corresponding one of the first magnetic flux collecting protrusions 44A of the first magnetic flux collecting ring 44 and a corresponding one of the second magnetic flux collecting protrusions of the second magnetic flux collecting ring 54. The electrical signals change according to the torsional deformation of the torsion bar 13, that is, the torsion angle of the torsion bar 13. For example, the control device for the steering system calculates torque acting on the torsion bar 13 based on the electrical signals generated by the first magnetic sensor 47A and the second magnetic sensor 47B. The torque is a physical quantity related to rotational motion of the rotating shaft 11.

### <Configuration for Joining>

Next, a configuration for joining the first sensor housing 40 and the second sensor housing 50 will be described.

The first sensor housing 40 and the second sensor housing 50 are joined by heat staking. Heat staking is a joining method in which heat and pressure are applied to a portion of a resin component to be staked to deform the portion, thereby fixing a joining target to the resin component. The first sensor housing 40 and the second sensor housing 50 are made of thermoplastic resin. Thermoplastic resin is a resin that softens when heated and solidifies when cooled.

As shown in FIG. 2, the first sensor housing 40 includes first to third pins 49A, 49B, 49C. The first to third pins 49A, 49B, 49C are provided on a first end face of the first sensor housing 40. The first end face is an opposing surface of the first sensor housing 40 that faces the second sensor housing 50 in the axial direction. The first to third pins 49A, 49B, 49C are columnar members each having a circular cross section, and protrude from the first end face toward the second sensor housing 50.

The protruding height of each of the first pin 49A and the second pin 49B from the first end face of the first sensor housing 40 is greater than the axial length of the second housing body 51. The protruding height of the third pin 49C from the first end face of the first sensor housing 40 is greater than the axial length of the second protruding portion 52.

The first pin 49A and the second pin 49B are disposed in a region of the first end face that corresponds to the first housing body 41 and that is located on the opposite side of the first insertion hole 43 from the first protruding portion 42 in the radial direction. The first pin 49A and the second pin 49B are arranged with spacing in a circumferential direction of the first housing body 41.

The third pin 49C is disposed in a region of the first end face that corresponds to the first protruding portion 42 and that is located on the opposite side of the board housing portion 42A from the first housing body 41. The third pin 49C is located at the center of the first protruding portion 42 in the circumferential direction of the first housing body 41.

The first to third pins 49A, 49B, 49C are arranged, for example, such that, when viewed in the axial direction of the first housing body 41, a shape formed by connecting the centers of the first to third pins 49A, 49B, 49C is an isosceles triangle. A vertex of the isosceles triangle is the center of the third pin 49C. The length of a line segment connecting the center of the third pin 49C and the center of the first pin 49C is equal to the length of a line segment connecting the center of the third pin 49C and the center of the second pin 49B.

As shown in FIG. 2, the second sensor housing 50 has first to third pin holes 55A, 55B, 55C. The first pin hole 55A and the second pin hole 55B are arranged in a region of the second housing body 51 that is located on the opposite side of the second insertion hole 53 from the second protruding portion 52. The first pin hole 55A and the second pin hole 55B are arranged with spacing in the circumferential direction of the second housing body 51. The first pin hole 55A and the second pin hole 55B extend through the second housing body 51 in the axial direction.

In the axial direction of the second housing body 51, the first pin hole 55A corresponds to the first pin 49A. The first pin 49A can be inserted into the first pin hole 55A in the axial direction. In the axial direction of the second housing body 51, the second pin hole 55B corresponds to the second pin 49B. The second pin 49B can be inserted into the second pin hole 55B in the axial direction.

The third pin hole 55C is disposed at the opposite end of the second protruding portion 52 from the second housing body 51. The third pin hole 55C is disposed at the center of the second protruding portion 52 in the circumferential direction of the second housing body 51. The third pin hole 55C extends through the second protruding portion 52 in the axial direction. In the axial direction of the second housing body 51, the third pin hole 55C corresponds to the third pin 49C. The third pin 49C can be inserted into the third pin hole 55C in the axial direction.

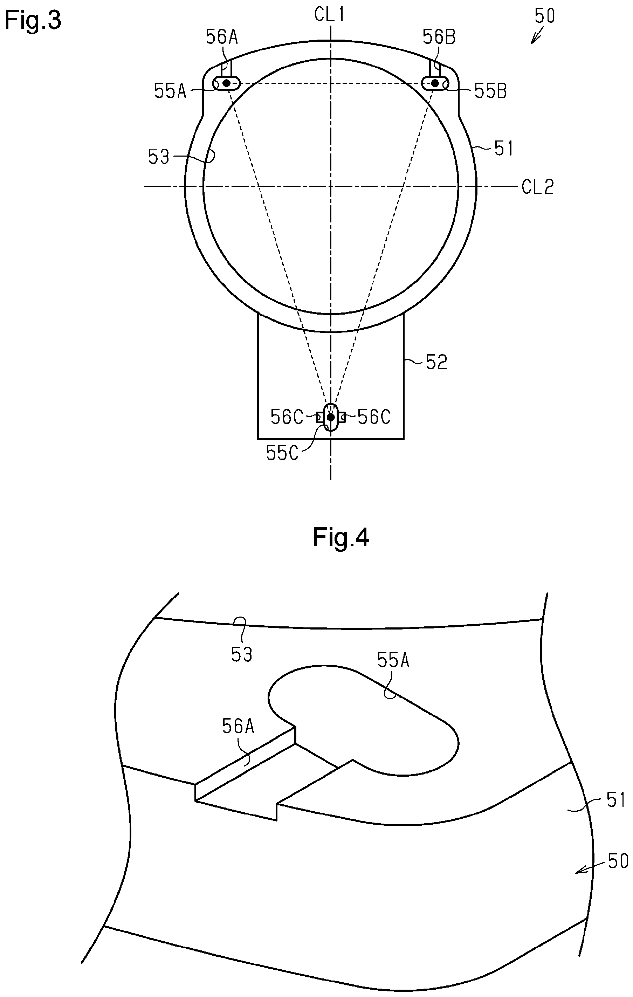

As shown in FIG. 3, the first to third pin holes 55A, 55B, 55C are elongated holes. An elongated hole refers to a hole having a contour similar to an ellipse, namely a contour formed by connecting two semicircular arcs obtained by dividing a circle into two with two parallel lines extending at a spacing equal to the diameter of the circle. The first pin hole 55A and the second pin hole 55B are arranged so as to be symmetrical with respect to a first center line CL1 when viewed in the axial direction of the second housing body 51. The third pin hole 55C is disposed on the first center line CL1 when viewed in the axial direction of the second housing body 51. The first center line CL1 is a straight line that passes through the center of the second housing body 51 and extends in the direction in which the second housing body 51 and the second protruding portion 52 are arranged, when viewed in the axial direction of the second housing body 51.

The first pin hole 55A and the second pin hole 55B extend along a second center line CL2 when viewed in the axial direction of the second housing body 51. The second center line CL2 is a straight line that passes through the center of the second housing body 51 and is perpendicular to the first center line CL, when viewed in the axial direction of the second housing body 51. The third pin hole 55C extends along the first center line CL1.

The lengths of the first to third pin holes 55A, 55B, 55C in their extending direction are greater than the outer diameters of the first to third pins 49A, 49B, 49C, respectively. The widths of the first to third pin holes 55A, 55B, 55C are equal to or slightly greater than the outer diameters of the first to third pins 49A, 49B, 49C, respectively. That is, the outer diameters of the first to third pins 49A, 49B, 49C are equal to or slightly smaller than the widths of the first to third pin holes 55A, 55B, 55C, respectively. The width refers to the dimension in a direction perpendicular to the direction in which the first to third pin holes 55A, 55B, 55C extend.

The first to third pin holes 55A, 55B, 55C are arranged, for example, such that, when viewed in the axial direction of the second housing body 51, a shape formed by connecting the centers of the first to third pin holes 55A, 55B, 55C is an isosceles triangle. A vertex of the isosceles triangle is the center of the third pin hole 55C. The length of a line segment connecting the center of the third pin hole 55C and the center of the first pin hole 55A is equal to the length of a line segment connecting the center of the third pin hole 55C and the center of the second pin hole 55B.

As shown in FIG. 3, the second sensor housing 50 includes first to third grooves 56A, 56B, 56C near the first to third pin holes 55A, 55B, 55C, respectively. The first groove 56A and the second groove 56B are provided on a first end face of the second housing body 51. The first end face is the opposite end face of the second sensor housing 40 from the first sensor housing 40.

The first groove 56A extends from the first pin hole 55A toward the outer periphery of the second housing body 51 along the first center line CL1. As shown in FIG. 4, a first end of the first groove 56A is open to the inside of the first pin hole 55A. A second end of the first groove 56A is open to the outside from the outer peripheral surface of the second housing body 51.

As shown in FIG. 3, the second groove 56B extends from the second pin hole 55B toward the outer periphery of the second housing body 51 along the first center line CL1. A first end of the second groove 56B is open to the inside of the second pin hole 55B. A second end of the second groove 56B is open to the outside from the outer peripheral surface of the second housing body 51. The second groove 56B is parallel to the first groove 56A.

The third groove 56C is provided on a first end face of the second protruding portion 52. The first end face is the opposite end face of the second protruding portion 52 from the first sensor housing 40. When viewed in the axial direction of the second housing body 51, the third groove 56C is disposed on both sides of the third pin hole 55C in a direction along the second center line CL2. When viewed in the axial direction of the second housing body 51, the two third grooves 56C extend in opposite directions along the second center line CL2 from the third pin hole 55C. A first end of each third groove 56C is open to the inside of the third pin hole 55C. A second end of each third groove 56C is closed.

### <Joining Method>

Next, a method for joining the first sensor housing 40 and the second sensor housing 50 will be described.

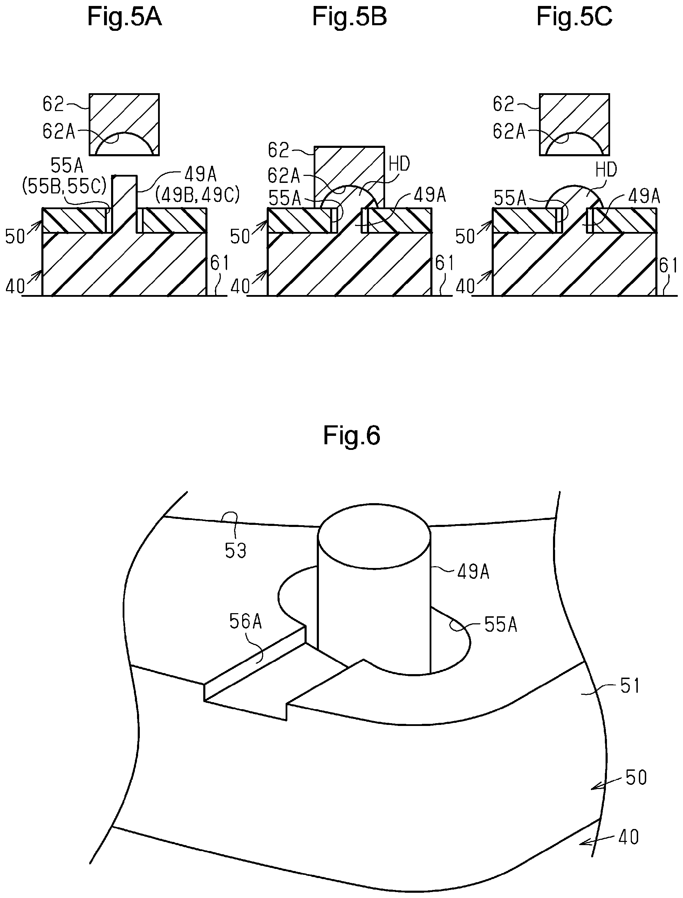

As shown in FIG. 5A, a heat staking machine is used to join the first sensor housing 40 and the second sensor housing 50. The heat staking machine includes a table 61 and a die 62. The table 61 has a placement surface. The placement surface is a surface of the table 61 on which a workpiece is placed. The workpiece includes the first sensor housing 40 and the second sensor housing 50. The die 62 faces the placement surface of the table 61 in a direction perpendicular to the placement surface. The die 62 is movable relative to the table 61 in a direction along the placement surface of the table 61. The die 62 is also movable up and down relative to the placement surface of the table 61 in the direction perpendicular to the placement surface.

A mating surface of the die 62 is provided with a recess 62A having a hemispherical surface. The mating surface is a surface of the die 62 that faces the placement surface of the table 61. The diameter of the hemispherical surface is greater than the inner diameters of the first to third pin holes 55A, 55B, 55C. The die 62 is made of metal and is heated to a set temperature by, for example, a heater. The set temperature is a temperature set to soften the first to third pins 49A, 49B, 49C and is a temperature at which the first to third pins 49A, 49B, 49C do not melt.

When joining the first sensor housing 40 and the second sensor housing 50, the first sensor housing 40 is first positioned and set on the table 61. The first to third pins 49A, 49B, 49C face upward relative to the table 61. Thereafter, the second sensor housing 50 is placed on the first end face of the first sensor housing 40. The first end face is an end face in the axial direction of the first sensor housing 40 on the side on which the first to third pins 49A, 49B, 49C are provided.

The first to third pin holes 55A, 55B, 55C respectively correspond to the first to third pins 49A, 49B, 49C in the axial direction. Therefore, as the second sensor housing 50 approaches the first sensor housing 40 in the axial direction, the first to third pins 49A, 49B, 49C are inserted into the first to third pin holes 55A, 55B, 55C, respectively. Eventually, a second end face of the second sensor housing 50 comes into contact with the first end face of the first sensor housing 40 in the axial direction. The second end face of the second sensor housing 50 is the opposite end face in the axial direction of the second sensor housing 50 from the end face on which the first to third grooves 56A, 56B, 56C are provided, and is an opposing surface facing the first sensor housing 40.

When the second end face of the second sensor housing 50 is in contact with the first end face of the first sensor housing 40 in the axial direction, tips of the first to third pins 49A, 49B, 49C protrude from a first end face of the second sensor housing 50. The first end face is an end face in the axial direction of the second sensor housing 50 on the side on which the first to third grooves 56A, 56B, 56C are provided. The tips of the first to third pins 49A, 49B, 49C are portions to be subjected to heat staking.

Next, the die 62 is moved to directly above one of the first to third pins 49A, 49B, 49C that is to be subjected to heat staking. When heat staking of one pin is completed, the die is moved to directly above a next pin to be subjected to heat staking. That is, the die 62 is sequentially moved to directly above the first to third pins 49A, 49B, 49C to be subjected to heat staking.

As shown in FIG. 5B, for example, the die 62 is lowered in a state in which the die 62 is disposed directly above the first pin 49A. Eventually, the inner surface of the recess 62A of the die 62 comes into contact with the tip of the first pin 49A. The die 62 applies pressure to the first pin 49A in a direction from the tip toward the base end of the first pin 49A. The tip of the first pin 49A is softened by heat from the die 62. Therefore, the tip of the first pin 49A is deformed by pressure from the die 62 so as to conform to the inner surface of the recess 62A. As the tip of the first pin 49A is deformed, the die 62 further moves downward. Eventually, the mating surface of the die 62 comes into contact with a region around the first pin hole 55A on the first end face of the second sensor housing 50. As a result, a hemispherical head portion HD is formed at the tip of the first pin 49A. The diameter of the hemisphere is greater than the inner diameter of the first pin hole 55A.

As shown in FIG. 5C, after the head portion HD is formed at the tip of the first pin 49A, the die 62 is raised. When the head portion HD is cooled and solidified, heat staking of the first pin 49A is completed. The peripheral edge of the head portion HD remains in contact with a region around the first pin hole 55A on the first end face of the second sensor housing 50. That is, the head portion HD remains covering the first pin hole 55A.

Heat staking is also performed on the second pin 49B and the third pin 49C in the same manner as the first pin 49A. A hemispherical head portion HD is thus formed at each of the tip of the second pin 49B and the tip of the third pin 49C in the same manner as the first pin 49A. When heat staking has been performed on all of the first to third pins 49A, 49B, 49C, joining between the first sensor housing 40 and the second sensor housing 50 is completed.

The second sensor housing 50 is sandwiched between the peripheries of the head portions HD of the first to third pins 49A, 49B, 49C and the first end face of the first sensor housing 40. Accordingly, movement of the second sensor housing 50 relative to the first sensor housing 40 in an assembling direction is restricted. The assembling direction refers to a direction perpendicular to both the first center line CL1 and the second center line CL2 when viewed in the axial direction of the second sensor housing 50.

### <Functions of Embodiment>

Next, functions of the present embodiment will be described. As shown in FIG. 6, for example, in a state in which the first pin 49A is inserted into the first pin hole 55A, there is a gap between the outer peripheral surface of the first pin 49A and the inner peripheral surface at both ends of the first pin hole 55A in the direction in which the first pin hole 55A extends. By an amount corresponding to this gap, the first pin 49A is movable relative to the first pin hole 55A in the direction in which the first pin hole 55A extends. The direction in which the first elongated hole 55A extends is a direction along the second center line CL2 when viewed in the axial direction of the second sensor housing 50.

In the state in which the first pin 49A is inserted into the first pin hole 55A, there may also be a gap between the outer peripheral surface of the first pin 49A and the inner peripheral surface of the first pin hole 55A in a direction perpendicular to the direction in which the first pin hole 55A extends. By an amount corresponding to this gap, the first pin 49A is movable relative to the first pin hole 55A in the direction perpendicular to the direction in which the first pin hole 55A extends. The direction perpendicular to the direction in which the first elongated hole 55A extends is a direction along the first center line CL1 when viewed in the axial direction of the second sensor housing 50.

When the second pin 49B is inserted into the second pin hole 55B, a gap similar to the gap between the first pin 49B and the first pin hole 55A is formed between the outer peripheral surface of the second pin 49B and the inner peripheral surface of the second pin hole 55B. When the third pin 49C is inserted into the third pin hole 55C, a gap similar to the gap between the first pin 49B and the first pin hole 55A is formed between the outer peripheral surface of the third pin 49C and the inner peripheral surface of the third pin hole 55C.

Accordingly, the second sensor housing 50 is movable relative to the first end face of the first sensor housing 40 in accordance with the gaps respectively formed between the outer peripheral surfaces of the first to third pins 49A, 49B, 49C and the inner peripheral surfaces of the first to third pin holes 55A, 55B, 55C. In this state, heat staking is performed on the first to third pins 49A, 49B, 49C.

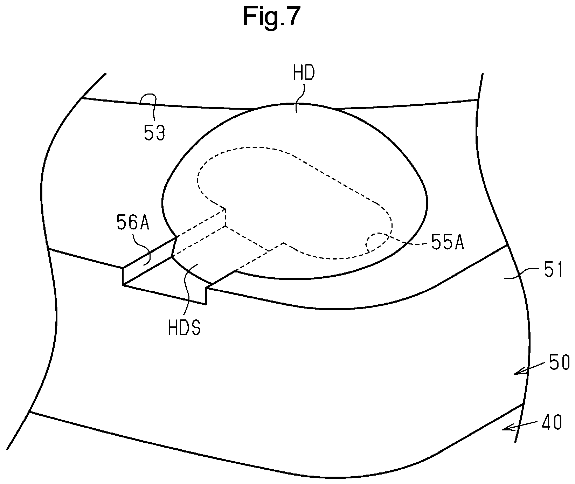

As shown in FIG. 7, for example, the tip of the first pin 49A softened by contact with the die 62 is pressed by pressure from the die 62 so as to be crushed while conforming to the inner surface of the recess 62A and is deformed so as to spread around the first pin hole 55A. As a result, the hemispherical head portion HD is formed at the tip of the first pin 49A. When the tip of the first pin 49A is crushed, part of the softened resin is pressed into the first groove 56A and is deformed so as to conform to the contour of the first groove 56A. As a result, a stopper portion HDS is formed on the head portion HD.

The stopper portion HDS is a portion of the head portion HD that has entered the interior of the first groove 56A. In the example of FIG. 7, the stopper portion HDS does not completely fill the first groove 56A, and a portion near the second end of the first groove 56A is exposed to the outside. The stopper portion HDS is a protruding portion that protrudes from a surface of the head portion HD that is in contact with a region around the first pin hole 55A on the first end face of the second sensor housing 50. The stopper portion HDS is in contact with the inner surface of the first groove 56A in a direction intersecting the direction in which the first groove 56A extends.

By performing heat staking on the second pin 49B, a stopper portion HDS is formed on a head portion HD of the second pin 49B in the same manner as the first pin 49B. The stopper portion HDS is a portion of the head portion HD that has entered the interior of the second groove 56B. By performing heat staking on the third pin 49C, a stopper portion HDS is formed on a head portion HD of the third pin 49C in the same manner as the first pin 49B. The stopper portion HDS is a portion of the head portion HD that has entered the interior of the third groove 56C.

Even after heat staking of the first to third pins 49A, 49B, 49C is completed, the gaps respectively formed between the outer peripheral surfaces of the first to third pins 49A, 49B, 49C and the inner peripheral surfaces of the first to third pin holes 55A, 55B, 55C are maintained.

However, movement of the first pin 49A relative to the first pin hole 55A in the direction in which the first pin hole 55Aextends is restricted by the stopper portion HDS contacting two inner surfaces of the first groove 56A that face each other in the direction in which the first pin hole 55A extends. The direction in which the first pin hole 55A extends is a direction along the second center line CL2 when viewed in the axial direction of the second sensor housing 50.

Movement of the second pin 49B relative to the second pin hole 55B in the direction in which the second pin hole 55B extends is restricted by the stopper portion HDS contacting two inner surfaces of the second groove 56B that face each other in the direction in which the second pin hole 55B extends. The direction in which the second pin hole 55B extends is a direction along the second center line CL2 when viewed in the axial direction of the second sensor housing 50.

Movement of the third pin 49C relative to the third pin hole 55C in the direction in which the third pin hole 55C extends is restricted by the stopper portion HDS contacting two inner surfaces of the third groove 56C that face each other in the direction in which the third pin hole 55C extends. The direction in which the third pin hole 55C extends is a direction along the first center line CL1 when viewed in the axial direction of the second sensor housing 50.

Accordingly, movement of the second sensor housing 50 relative to the first end face of the first sensor housing 40 in the direction along the first center line CL1 is restricted by the stopper portion HDS of the third pin 49C contacting the inner surface of the third groove 56C. Movement of the second sensor housing 50 relative to the first end face of the first sensor housing 40 in the direction along the second center line CL2 is restricted by the stopper portion HDS of the first pin 49A contacting the inner surface of the first groove 56A. Movement of the second sensor housing 50 relative to the first end face of the first sensor housing 40 in the direction along the second center line CL2 is also restricted by the stopper portion HDS of the second pin 49B contacting the inner surface of the second groove 56B. Accordingly, movement of the second sensor housing 50 relative to the first end face of the first sensor housing 40 in any direction is restricted.

### <Effects of Embodiment>

The present embodiment has the following effects.
(1) The first sensor housing 40 includes pins (49A, 49B, 49C). The second sensor housing 50 has pin holes (55A, 55B, 55C) and grooves (56A, 56B, 56C) extending from the pin holes (55A, 55B, 55C). The head portion HD of each pin (49A, 49B, 49C) includes a stopper portion HDS that has entered the interior of the corresponding groove (56A, 56B, 56C). Each stopper portion HDS is in contact with the inner surface of the corresponding groove (56A, 56B, 56C) in a direction intersecting the direction in which the groove (56A, 56B, 56C) extends.

There may be a gap between the outer peripheral surface of each pin (49A, 49B, 49C) and the inner peripheral surface of the corresponding pin hole (55A, 55B, 55C). With the above configuration, the stopper portion HDS provided on the head portion HD of each pin (49A, 49B, 49C) contacts the inner surface of the corresponding groove (56A, 56B, 56C). As a result, movement of the second sensor housing 50 relative to the first sensor housing 40, that is, misalignment between the first sensor housing 49 and the second sensor housing 50, can be suppressed.

(2) There is a plurality of pairs each including a pin (49A, 49B, 49C) and a pin hole (55A, 55B, 55C). When viewed in the axial direction of the rotating shaft 11, the direction in which the groove (56A, 56B, 56C) extends relative to the pin hole (55A, 55B, 55C) differs between at least one pair and the other pairs. In the present embodiment, the direction in which the third groove 56C extends differs from the direction in which the first groove 56A and the second groove 56B extend.

The stopper portion HDS provided on the head portion HD of each pin (49A, 49B, 49C) is in contact with the inner surface of the corresponding groove (56A, 56B, 56C) in a direction intersecting the direction in which the groove (56A, 56B, 56C) extends. Accordingly, a direction in which the stopper portion HDS provided on the head portion HD of the pin (49C) of at least one pair contacts the inner surface of the corresponding groove (56C) differs from a direction in which the stopper portions HDS of the head portions HD of the pins (49A, 49B) of the other pairs contact the inner surfaces of the corresponding grooves (56A, 56B). Therefore, movement of the second sensor housing 50 relative to the first sensor housing 40 in a plurality of directions can be suppressed.

(3) There is a plurality of pairs each including a pin (49A, 49B, 49C) and a pin hole (55A, 55B, 55C). The pin holes (55A, 55B, 55C) are elongated holes each extending in a specific direction when viewed in the axial direction of the rotating shaft 11. When viewed in the axial direction of the rotating shaft 11, the direction in which the pin hole (55A, 55B, 55C) extends differs between at least one pair and the other pairs. In the present embodiment, the direction in which the third pin hole 55C extends differs from the direction in which the first pin hole 55A and the second pin hole 55B extend.

Accordingly, the direction in which the third pin 49C moves differs from the direction in which the first pin 49A and the second pin 49B move. That is, the direction in which the pin (49C) of at least one pair moves differs from the direction in which the pins (49A, 49B) of the other pairs move. Therefore, movement of the second sensor housing 50 relative to the first sensor housing 40 can be suppressed compared with a case in which all the pin holes (55A, 55B, 55C) extend in the same direction.

(4) There is a plurality of pairs each including a pin (49A, 49B, 49C) and a pin hole (55A, 55B, 55C). The pin hole (55A, 55B, 55C) of each pair is an elongated hole extending in a specific direction when viewed in the axial direction of the rotating shaft 11. When viewed in the axial direction of the rotating shaft 11, the pin hole (55C) of at least one pair extends in a direction perpendicular to the direction in which the pin holes (55A, 55B) of the other pairs extend. When viewed in the axial direction of the rotating shaft 11, each groove (56A, 56B, 56C) extends in a direction perpendicular to the direction in which the corresponding pin hole (55A, 55B, 55C) extends.

The stopper portion HDS provided on the head portion HD of each pin (49A, 49B, 49C) is in contact with the inner surface of the corresponding groove (56A, 56B, 56C) in a direction perpendicular to the direction in which the groove (56A, 56B, 56C) extends. Accordingly, movement of the second sensor housing 50 relative to the first sensor housing 40 in two directions is restricted. The two directions include a first direction that is the direction in which the pin hole (55C) of at least one pair extends, and a second direction that is the direction in which the pin holes (55A, 55B) of the other pairs extend.

(5) The second sensor housing 50 is sandwiched between the peripheries of the head portions HD of the pins (49A, 49B, 49C) of each pair and the first sensor housing 40. Accordingly, movement of the second sensor housing 50 relative to the first sensor housing 40 in an assembling direction is restricted. The assembling direction is a third direction perpendicular to both the first direction and the second direction described above in (4). That is, movement of the second sensor housing 50 relative to the first sensor housing 40 in three directions perpendicular to each other is restricted.

(6) The pins (49A, 49B, 49C) are provided integrally with the first sensor housing 40 by resin molding. The pin holes (55A, 55B, 55C) and the grooves (56A, 56B, 56C) are provided on the second sensor housing 50 by resin molding. Therefore, movement of the second sensor housing 50 relative to the first sensor housing 40 can be appropriately suppressed without increasing the number of components.

(7) When heat staking is performed, excess resin may be generated inside the die 62. In this case, the excess resin is pushed out of the die 62 through a passage surrounded by inner surfaces of the grooves (56A, 56B, 56C) and the mating surface of the die 62. Therefore, positions at which burrs occur can be controlled by the grooves (56A, 56B, 56C). Burrs are a phenomenon in which resin overflows from a gap between the mating surface of the die 62 and the first end face of the second sensor housing 50.

(8) The rotating shaft 11 that is a detection target is, for example, a steering shaft of a vehicle. In a case where the torque sensor 10 is mounted on a vehicle, vibrations generated during travel of the vehicle are applied to the torque sensor 10. Therefore, misalignment between the first sensor housing 40 and the second sensor housing 50 may occur. With the torque sensor of the present embodiment, misalignment between the first sensor housing 40 and the second sensor housing 50 is suppressed. Therefore, the torque sensor 10 of the present embodiment is suitable as a torque sensor that is mounted on a vehicle.

### <Other Embodiments>

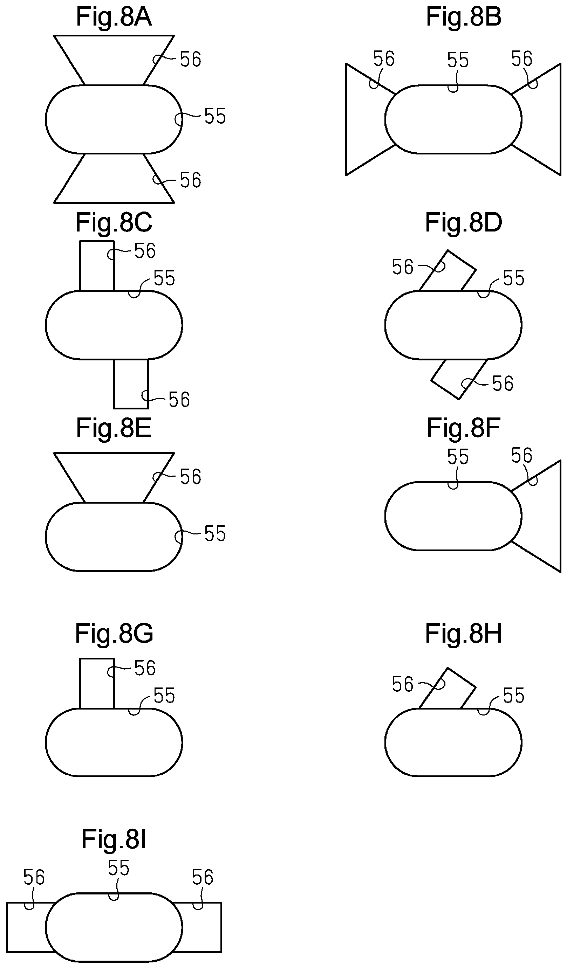

The present embodiment may be modified as follows.
- The outer diameters of the first to third pins 49A, 49B, 49C may be slightly greater than the widths of the first to third pin holes 55A, 55B, 55C, respectively. The width refers to the dimension in a direction perpendicular to the direction in which the first to third pin holes 55A, 55B, 55C extend. In this case, the first to third pins 49A, 49B, 49C are press-fitted into the first to third pin holes 55A, 55B, 55C, respectively. The press fitting may be light press fitting such that the components can be disassembled without being damaged. With this configuration, when the first sensor housing 40 and the second sensor housing 50 are assembled, movement of the first to third pins 49A, 49B, 49C relative to the corresponding first to third pin holes 55A, 55B, 55C is suppressed. Accordingly, when the first sensor housing 40 and the second sensor housing 50 are joined, misalignment of the second sensor housing 50 relative to the first sensor housing 40 can be suppressed.
   - The shapes of the first to third grooves 56A, 56B, 56C and arrangements of the first to third grooves 56A, 56B, 56C with respect to the first to third pin holes 55A, 55B, 55C may be modified as appropriate. Specific examples are shown in FIGS. 8A to 8I. In FIGS. 8A to 8I, the first to third pin holes 55A, 55B, 55C are collectively referred to as "pin hole 55." The first to third grooves 56A, 56B, 56C are collectively referred to as "groove 56."

As shown in FIG. 8A, the groove 56 has a trapezoidal shape and is disposed on both sides of the pin hole 55 in a direction perpendicular to the direction in which the pin hole 55 extends, when viewed in the axial direction of the second housing body 51. The width of the groove 56 increases as it extends away from the pin hole 55 in the direction perpendicular to the direction in which the pin hole 55 extends. The width refers to the dimension of the groove 56 in the direction in which the pin hole 55 extends. As shown in FIG. 8E, the groove 56 may be disposed on one side of the pin hole 55 in the direction perpendicular to the direction in which the pin hole 55 extends, when viewed in the axial direction of the second housing body 51.

As shown in FIG. 8B, the groove 56 has a trapezoidal shape and is disposed on both sides of the pin hole 55 in the direction in which the pin hole 55 extends, when viewed in the axial direction of the second housing body 51. The width of the groove 56 increases as it extends away from the pin hole 55 in the direction in which the pin hole 55 extends. The width refers to the dimension of the groove 56 in a direction perpendicular to the direction in which the pin hole 55 extends. The maximum width of the groove 56 is greater than the width of the pin hole 55. As shown in FIG. 8F, the groove 56 may be disposed on one side of the pin hole 55 in the direction in which the pin hole 55 extends, when viewed in the axial direction of the second housing body 51.

As shown in FIG. 8C, the groove 56 has a rectangular shape and is disposed on both sides of the pin hole 55 in a direction perpendicular to the direction in which the pin hole 55 extends, when viewed in the axial direction of the second housing body 51. The two grooves 56 extend from the pin hole 55 in opposite directions in the direction perpendicular to the direction in which the pin hole 55 extends, when viewed in the axial direction of the second housing body 51. The two grooves 56 are disposed at different positions in the direction in which the pin hole 55 extends. As shown in FIG. 8G, the groove 56 may be disposed on one side of the pin hole 55 in the direction perpendicular to the direction in which the pin hole 55 extends, when viewed in the axial direction of the second housing body 51.

As shown in FIG. 8D, the groove 56 is disposed on both sides of the pin hole 55 in a direction perpendicular to the direction in which the pin hole 55 extends, when viewed in the axial direction of the second housing body 51. The two grooves 56 extend from the pin hole 55 in opposite directions in a direction obliquely intersecting the direction in which the pin hole 55 extends, when viewed in the axial direction of the second housing body 51. The two grooves 56 are disposed at different positions in the direction in which the pin hole 55 extends. The two grooves 56 are parallel to each other. As shown in FIG. 8H, the groove 56 may be disposed on one side of the pin hole 55 in the direction perpendicular to the direction in which the pin hole 55 extends, when viewed in the axial direction of the second housing body 51.

As shown in FIG. 8I, the groove 56 is disposed on both sides of the pin hole 55 in the direction in which the pin hole 55 extends, when viewed in the axial direction of the second housing body 51. The two grooves 56 extend from the pin hole 55 in opposite directions in the direction in which the pin hole 55 extends, when viewed in the axial direction of the second housing body 51. Although not shown in the figures, the groove 56 may be disposed on one side of the pin hole 55 in the direction in which the pin hole 55 extends, when viewed in the axial direction of the second housing body 51.

When heat staking is completed, each groove 56 shown in FIGS. 8A to 8I may be entirely covered by the head portion HD, or each groove 56 may be partially exposed to the outside of the head portion HD. A portion of the head portion HD that has entered the interior of the groove 56 functions as the stopper portion HDS. The stopper portion HDS may enter part of the interior of the groove 56, or may enter the entire interior of the groove 56. The orientation of the pin hole 55 is set as appropriate in accordance with product specifications. Although not shown in the figures, the pin hole 55 does not have to be an elongated hole, and may be a round hole having a circular cross section.

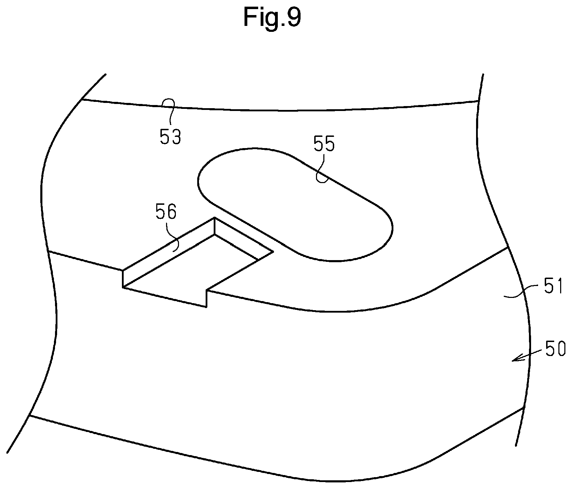

As long as the stopper portion HDS is formed by a portion of the head portion HD that has entered the interior of the groove 56 when heat staking is completed, the first end of the groove 56 does not have to be open to the interior of the pin hole 55, as shown in FIG. 9.
- The first sensor housing 40 may have the first to third pin holes 55A, 55B, 55C and the first to third grooves 56A, 56B, 56C, and the second sensor housing 50 may have the first to third pins 49A, 49B, 49C. In this case, the first to third pin holes 55A, 55B, 55C are provided so as to extend through the first sensor housing 40 in the axial direction. The first to third grooves 56A, 56B, 56C are provided on a second end face of the first sensor housing 40. The second end face is the opposite end face of the first sensor housing 40 from the second sensor housing 50 in the axial direction. The first to third pins 49A, 49B, 49C are provided on the second end face of the second sensor housing 50. The second end face is an end face of the second sensor housing 50 that faces the first sensor housing 40 in the axial direction. In this case, the first sensor housing 40 corresponds to the "second housing," and the second sensor housing 40 corresponds to the "first housing."
- In a case where both the first magnetic flux collecting ring 44 and the second magnetic flux collecting ring 54 are provided on the first sensor housing 40, the second sensor housing 50 may be made of metal.
   - The second housing body 51 and the second protruding portion 52 may be separate members, and the second housing body 51 may be formed integrally with the first sensor housing 40. In this case, in order to suppress misalignment between the first sensor housing 40 with which the second housing body 51 is integrally formed and the second protruding portion 52 separated from the second housing body 51, it is sufficient that the third pin 49C, the third pin hole 55C, and the third grooves 56C are present. The first sensor housing 40 with which the second housing body 51 is integrally formed corresponds to the "first housing." The second protruding portion 52 separated from the second housing body 51 corresponds to the "second housing."
- The detection target of the torque sensor 10 is not limited to a steering shaft of a vehicle. The torque sensor 10 can be used to detect torque applied to shafts of various mechanical devices. The mechanical devices include, for example, machine tools or robots.
- The expression "at least one" as used in the present specification means "one or more" of desired options. As one example, when there are two options, the expression "at least one" as used in the present specification means "one of the options" or "both of the two options." As another example, when there are three or more options, the expression "at least one" as used in the present specification means "one of the options" or "any combination of two or more options."

## Claims

1. A torque sensor comprising a detection unit configured to generate an electrical signal according to an amount of torsional deformation of a shaft that is a detection target, the detection unit including a first housing and a second housing assembled with each other in an axial direction of the shaft, wherein:
each of the first housing and the second housing includes an opposing surface, the opposing surfaces of the first housing and the second housing facing each other in the axial direction;
the first housing includes a pin protruding in the axial direction from the opposing surface of the first housing;
the second housing has a pin hole extending through the second housing in the axial direction and corresponding to the pin;
a head portion covering the pin hole is provided at a tip of the pin by heat staking the tip of the pin with the pin disposed in the pin hole, and the first housing and the second housing are joined together;
the second housing includes a groove near the pin hole on an opposite surface from the opposing surface of the second housing; and
the head portion includes a stopper portion that enters an interior of the groove, the stopper portion being in contact with an inner surface of the groove in a direction intersecting a direction in which the groove extends.

2. The torque sensor according to claim 1, wherein:
a plurality of pairs each including the pin and the pin hole is provided; and
when viewed in the axial direction of the shaft, a direction in which the groove extends relative to the pin hole differs between at least one of the pairs and another pair.

3. The torque sensor according to claim 1 or 2, wherein:
a plurality of pairs each including the pin and the pin hole is provided;
the pin hole of each of the pairs is an elongated hole extending in a specific direction, when viewed in the axial direction of the shaft; and
when viewed in the axial direction of the shaft, a direction in which the pin hole extends differs between at least one of the pairs and another pair.

4. The torque sensor according to claim 1 or 2, wherein:
a plurality of pairs each including the pin and the pin hole is provided;
the pin hole of each of the pairs is an elongated hole extending in a specific direction, when viewed in the axial direction of the shaft;
the pin hole of at least one of the pairs extends in a direction perpendicular to a direction in which the pin hole of another pair extends, when viewed in the axial direction of the shaft; and
the groove extends in a direction perpendicular to a direction in which a corresponding one of the pin holes extends, when viewed in the axial direction of the shaft.

5. The torque sensor according to claim 1 or 2, wherein the shaft is a steering shaft of a vehicle.
